Europäisches Patentamt

European Patent Office

Office européen des brevets

(11) Publication number: **0 223 250 B1**

# EUROPEAN PATENT SPECIFICATION

(45) Date of publication of patent specification: **24.04.91**

(21) Application number: **86116083.6**

(22) Date of filing: **20.11.86**

(51) Int. Cl.⁵: **A47K 1/04, A47K 3/02, A47K 3/22, B32B 5/18, B32B 17/00, B32B 27/30, B32B 31/16**

(54) Sanitary wares of acrylic or methacrylic resins and method for obtaining them.

(30) Priority: **22.11.85 IT 2295685**

(43) Date of publication of application:
**27.05.87 Bulletin 87/22**

(45) Publication of the grant of the patent:
**24.04.91 Bulletin 91/17**

(84) Designated Contracting States:
**AT BE CH DE ES FR GB GR LI NL SE**

(56) References cited:
**EP-A- 0 034 678**
**GB-A- 2 148 786**
**GB-A- 2 171 008**

(73) Proprietor: **VEDRIL S.p.A.**
**31, Foro Buonaparte**
**Milan(IT)**

(72) Inventor: **Sempio, Carlo, Dr.**
**25, via Massimo d'Azeglio**
**I-21052 Busto Arsizio Varese(IT)**
Inventor: **Vailati, Romeo**
**15, corso XX Settembre**
**I-21052 Busto Arsizio Varese(IT)**
Inventor: **Ronchetti, Tullo**
**13, via Pier Capponi**
**I-20145 Milan(IT)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S. Schu-**
**bert Dr. P. Barz Siegfriedstrasse 8**
**W-8000 München 40(DE)**

## Description

The present invention relates to sanitary wares of acrylic or methacrylic resins and to a method for the manufacture thereof.

The term "sanitary wares", as used herein, denotes bathtubs, shower trays, sinks, bidets, etc.,

GB-A-2,148,786 discloses sanitary wares according to the preamble of present claim 1. According to said document a laminated article, for example a bath or shower-tray, is manufactured by providing a preformed shell, for example a thermoformed acrylic sheet, which shell is placed in a mould together with, if required, a reinforcing board. The mould is then closed and materials are injected into the mould cavity which react to form a reinforcing layer on the shell. Preferably, the injected materials comprise a polyol reactant and an isocyanate reactant which form a layer of rigid polyurethane foam. A reinforcing agent, for example glass fibre, and a blowing agent may also be introduced into the mould cavity.

Other possible materials to be injected into the mould cavity are polyesters but no mention is made that said polyesters have to satisfy certain requirements.

EP-A-34678 is directed to lightweight and dimensionally accurate resin concrete molded products which essentially comprise an intermediate layer composed of resin concrete and a pair of reinforcing layers composed of a filler reinforced plastic material between which layers the resin concrete layer is sandwiched.

Sanitary wares of thermoformed polymethyl methacrylate reinforced with compact fiberglass-filled polyester obtainable, e.g., according to the process of EP-A-34678 are commercially available, but the manufacture of such articles is associated with disadvantages, which can be summarized as follows:

a) Need of carrying out compacting and rolling operations (with significant increase of production costs) on the manufactured articles in order to obtain reinforcing layers free from cavities and to orient the fiberglass in a parallel arrangement to the surface of the manufactured article. Said cavities, as known, impair the stiffness of the article, and its resistance to temperature changes.

b) Impossibility of automating the rolling and compacting process but with very high costs (which cannot be borne by this type of products) because of the strong differences in shape and size of the articles produced.

c) Hygienic-sanitary problems due to the necessity to operate manually, with the resulting danger that workers breathe vapours of monomers during the course of the operations.

It has now been found that sanitary wares of acrylic or methacrylic resin composed of a sheet of thermoformed resin and a reinforcing layer of fiberglass-filled foamed unsaturated polyester, which has been applied by spraying onto the back of the thermoformed resin sheet, do not show the above drawbacks.

The thermoformed resin sheet preferably consists of polymethyl methacrylate, and in the reinforcement layer the fibreglass/polyester ratio preferably ranges from 10/90 to 40/60, most preferred from 15/85 to 25/75.

A further object of the present invention is the process for the manufacture of the above sanitary wares of acrylic or methacrylic resin having a reinforcement layer of fiberglass-filled foamed unsaturated polyester, which process renders it possible to avoid the rolling and compacting operations and to obtain articles which are considerably improved with respect to surface finish, weight and heat insulation.

Said process is based on the use of polyester resins which foam up on hardening, assume a compact shape with no need of manual rolling operations and can be applied by spraying onto the back of the sheet of thermoformed resin. Thereby the time for carrying out the reinforcing operation can be reduced by about 50% in the spraying and compacting steps, and by about 3/4 during the hardening.

The spraying operation can be carried out in a completely automatic form, without any actions by the attending personnel, or inside rooms wherein no people are present, with evident advantages of technical-economic and hygienic character.

The process of the present invention comprises the following steps:

1) sheet heating;

2) thermoforming;

3) spraying onto the back of said thermoformed sheet a reinforcement material composed of a foamable unsaturated polyester and fiberglass;

4) hardening said reinforcement; and

5) trimming the final product.

The process of the present invention essentially is based on the use of polyester resins chemically foamed by means of additives and catalysts. All types of unsaturated polyester resins suitable for use with fiberglass can be used in the present process. Examples of said resins are resins based on maleic anhydride, phthalic anhydride, fumaric acid, tetrahydrophthalic acid, hexahydrophthalic acid, diallylphthalate, etc. Foaming agents, catalysts, and accelerators/inhibitors may be added thereto according to the technology used in this field.

The preferred expanding agent is tert.-butyl-hydrazine chloride blended with iron- (III) chloride, marketed under the tradename LUPERFOAM ® 239 by PENNWALT, LUCIDOL Division (Buffalo, U.S.A.). Said agent may be mixed with the resins before the spraying in an amount of 0.5-4%, preferably 1-1.5% by weight.

The catalyst may be an organic peroxide, such as the peroxides used for the crosslinking of polyester resins. In particular, the catalyst may be selected from the peroxides of aliphatic and alicyclic ketones, diacylperoxides, hydroperoxides, peroxyesters, perketals, dialkylperoxides, such as, e.g., methylethylketone peroxide, cyclohexanone peroxide, benzoylperoxide, cumyl hydroperoxide, tert.-butyl-peroxybenzoate, dicumylperoxide, etc. A preferred catalyst is a mixture of peroxyesters marketed under the tradename LUPEROX ® DP 33, manufactured by PENNWALT. Said catalysts are used at a level of 1-5%, preferably of about 3% by weight, based on the resin, and are added at the time of the spraying operation.

The accelerator/inhibitor system is used to facilitate the hardening of the resin within predetermined times, which can range from 30 seconds to 20 minutes. The accelerator may be selected from substituted aromatic amines such as, e.g., dimethylaniline, diethylaniline, dimethyl-p-toluidine, or from cobalt and/or vanadium and/or manganese salts of organic acids, such as, e.g., cobalt octanoate, vanadium 2-ethylhexanoate, etc., or from mixtures of said two classes. A preferred accelerator is the commercial product ERGONAL ®R, containing vanadium 2-ethylhexanoate, manufactured by PENNWALT. The inhibitor may be selected from hindered phenols, such as, e.g., tert.-butylcatechol, di-tert.-butyl-p-cresol, etc. A preferred inhibitor is a mixture of these two derivatives and is marketed under the tradename LUCHEM ® IN 5 by PENNWALT. Said products are used in mixture with the resin at a level of 0.1-0.6% by weight, respectively.

The reinforcement operation is carried out by means of the contemporaneous deposition of polyester resin and of fiberglass, carried out by hand-operated guns, or, preferably, by using a robotized system. The hardening times are suitably adjusted by means of the accelerator/inhibitor system as a function of the type of sheet to be reinforced.

Typical hardening times for the sheets of polymethyl methacrylate are of the order of 4-5 minutes.

The increase in volume due to the foaming can range from 10 to 200% of the initial volume, and preferably is around 100%.

The sheets of acrylic or methacrylic resin used in the present invention can be of different type. There can be used: Cast sheets, extruded sheets obtained with polymethyl methacrylates having characteristics corresponding to 150 DIS 8257/1/2 or co-extruded sheets consisting of two or more layers, wherein the layer in contact with water is generally polymethyl methacrylate or shock-resistant polymethyl methacrylate, modified with acrylic rubbers, e.g., the rubbers based on butyl acrylate and styrene, while the other layer(s) can be of shock-resistant polymethyl methacrylate, ABS, MBS, etc.

In addition to the advantages of industrial character as previously illustrated, the process of the present invention allows to obtain a substantial improvement of the quality of the sanitary wares produced. In particular, the surface appearance of the reinforcing layer is improved, which layer covers the fiberglass to a more complete extent, preventing it from appearing at the article's surface. This is not only an aesthetical advantage, but also serves to considerably improve the handiness of the articles.

Another improvement is the reduction of the weight of the articles, with the stiffness being the same, which represents a saving in terms of raw materials, and furthermore allows a better heat insulation, with consequent greater comfort for the user.

These advantages result in the articles manufactured according to the present invention to constitute per se an improvement relative to the corresponding products of the prior art.

The following non-limitative examples are to illustrate the present invention.

EXAMPLE 1

A co-extruded sheet of 5 mm of total thickness, consisting of a layer of polymethyl methacrylate (Applicant's Vedril granules 9K) in accordance with ISO DIS 8257/1/2 (thickness of about 4 mm) and of a layer of shock-resistant modified polymethyl methacrylate (Applicant's Vedril granules 18 V) (thickness of about 1 mm) was thermoformed in known manner until a shell having the shape of a bathtub of approximately 1810x810x590 mm was obtained. The thermoplastic shell was reinforced by the spraying of polyester resins ("Syrester ® 3320", product of SIR) and fiberglass cut to a staple of 1-2 cm in length, in a resin: fiberglass weight ratio of 85:15 and to a thickness of about 3 mm on the vertical walls and of about 5 mm at the bottom. The resin applied onto the bottom embedded a panel of rigid polyurethane (specific gravity 0.3 g/cm$^3$)of a size corresponding to the bottom of the bathtub and of 2 om in thickness, applied as a further stiffening means. The resin Sirester ® 3320 was mixed, before being sprayed, with the foaming agent Superfoam 329 (manufactured by PENNWALT) at a concentration of 1.25 parts by weight per 100 parts of resin, and with 0.2 parts by weight of an accelerator (ERGONAL®L).

The catalyst LUPEROX ® DP 33 (PENNWALT LUCIDOL DIVISION), at a concentration of 3% by weight, was added to the resin at the time of spraying. The resin set within about 4 minutes, with an exothermic peak of 48°C.

The reinforced bathtub was trimmed and subsequently subjected to the tests according to the C.E.N. p.a. EN 198, part 1, Standard draft. The bathtub met all of the prescriptions of said standard.

The temperature cycle tests according to the above mentioned Standard draft (§ 3.2.2., test "b") were continued for a further 400 cycles. After a total of 500 cycles, the bathtub did not show any faults.

The bathtub weighed 16 kg, comapred to a weight of 20 kg of an identical bathtub coated with non-foamed fiberglass-reinforced polyester resin (of 3-4 mm in thickness).

After the temperature cycle test, the bathtub was cut and the reinforcing layer was carefully examined.

Said layer did not show any signs of peeling, nor did it show cavities. The average specific gravity measured on samples of the reinforcing layer was 0.9 g/cm³.

A sharp wedge forcedly applied in correspondence to the junction area between the acrylic sheet and the reinforcing layer was not able to cause a separation at the interface, but on the contrary caused a breakage in the polyester layer.

From a vertical wall of the bathtub, 12 specimens of 120x10 mm were cut.Onsaid specimens, with supports positioned at a distance of 100 mm, low-speed (5 mm/minute) measurements of flexural stiffness were carried out. Values comparable to those of an identical bathtub reinforced according to the technique known from the prior art were obtained: 23.3 N/mm for the specimen reinforced with foamed polyester and 19.2 N/mm for the specimen reinforced according to the prior art.

Heat conductivity tests were carried out on panels of 100x100 mm, drawn off from the side walls. The data on the average was lower by 40% than that of analogous specimens drawn off from a bathtub reinforced according to the prior art: 0.095 kcal/m.h.°C in the case of a specimen reinforced with foamed polyester, 0.14 kcal/m.h.°C in the case of a specimen in accordance with the prior art.

EXAMPLE 2

The co-extruded sheet of Example 1 was thermoformed to the shape of a shower tray (750x750x200 mm) and reinforced according to the procedure of Example 1, but with a thickness of the reinforcing layer of 4 mm and without inserting the polyurethane panel.

The article thus manufactured passed the tests prescribed by the European Standard for shower trays.

## Claims

1. Sanitary wages of acrylic or methacrylic resin composed of a sheet of thermoformed resin and a reinforcing layer of fiberglass-filled polyester, characterized in that said polyester is a foamed unsaturated polyester which has been applied by spraying onto the back of the thermoformed resin sheet.

2. Sanitary wares according to claim 1, wherein the resin is polymethyl methacrylate.

3. Sanitary wares according to claims 1 and 2, wherein the thermoformed resin sheets are cast sheets, extruded sheets or co-extruded sheets consisting of two or more layers, wherein the layer in contact with water generally is polymethyl methacrylate or shock-resistant polymethyl methacrylate, and the remaining layers are of shock-resistant polymethyl methacrylate, ABS, MBS.

4. Sanitary wares according to the preceding claims, wherein the weight ratio fiberglass/polyester ranges from 10/90 to 40/60 and preferably from 15/85 to 25/75.

5. Process for the manufacture of sanitary wares of acrylic or methacrylic resin according to claim 1, comprising the steps of
   1) sheet heating; and
   2) thermoforming;
   characterized in that it also comprises the steps of
   3) spraying onto the back of said thermoformed sheet a reinforcement material composed of a foamable unsaturated polyester and fiberglass;
   4) hardening said reinforcement; and
   5) trimming the final product.

## Revendications

1. Articles sanitaires en résine acrylique ou méthacrylique composés d'une feuille de résine thermoformée et d'une couche de renforcement de polyester chargé de fibres de verre, caractérisés en ce que ce polyester est un polyester insaturé moussé qui a été appliqué par pulvérisation sur le dos de la feuille de résine thermoformée.

2. Articles sanitaires suivant la revendication 1, caractérisés en ce que la résine est un polyméthacrylate de méthyle.

3. Articules sanitaires suivant les revendications 1 et 2, caractérisés en ce que les feuilles de résine thermoformées sont des feuilles coulées des feuilles extrudées ou des feuilles coextrudées consistant en deux ou plusieurs couches, dans lesquelles la couche en contact avec l'eau est généralement faite de polyméthacrylate de méthyle ou de polyméthacrylate de méthyle résistant aux chocs, et les couches restantes sont faites de polyméthacrylate de méthyle résistant aux chocs, ABS, MBS.

4. Articles sanitaires suivant les revendications précédentes, caractérisés en ce que le rapport en poids des fibres de verre au polyester est d'ordre de 10/90 à 40/60 et de préférence de 15/85 à 25/75.

5. Procédé pour la fabrication d'articles sanitaires en résine acrylique ou méthacrylique suivant la revendication 1, comprenant les étapes de:
   1) chauffage d'une feuille; et
   2) thermoformage;
   caractérisé en ce qu'il comprend aussi les étapes de;
   3) pulvérisation sur le dos de cette feuille thermoformée d'un matériau de renforcement composé d'un polyester insaturé pouvant mousser et de fibres de verre;
   4) durcissement de ce renforcement; et
   5) ébarbage du produit final.

## Ansprüche

1. Sanitärartikel aus Acryl- oder Methacrylharz, bestehend aus einer Folie eines warmgeformten Harzes und einer Verstärkungsschicht aus einem mit Glasfaserfüllstoff versehenen Polyester, dadurch gekennzeichnet, daß der Polyester ein verschäumter ungesättigter Polyester ist, der durch Aufsprühen auf die Rückseite der warmgeformten Harzfolie aufgebracht worden ist.

2. Sanitärartikel gemäß Anspruch 1, in welchen das Harz Polymethylmethacrylat ist.

3. Sanitärartikel gemäß den Ansprüchen 1 und 2, in welchen die warmgeformten Harzfolien gegossene Folien, extrudierte oder koextrudierte Folien sind, die aus zwei oder mehr Schichten bestehen, in welchen die mit Wasser in Kontakt stehende Schicht im allgemeinen Polymethylmethacrylat oder ein stoßfestes Polymethylmethacrylat ist und die übrigen Schichten aus stoßfestem Polymethylmethacrylat, ABS, MBS bestehen.

4. Sanitärartikel gemäß den vorhergehenden Ansprüchen, in welchen das Gewichtsverhältnis von Glasfaser/Polyester im Bereich von 10/90 bis 40/60 und vorzugsweise von 15/85 bis 25/75 liegt.

5. Verfahren zur Herstellung von Sanitärartikeln aus Acryl-oder Methacrylharz gemäß Anspruch 1, das die Schritte umfaßt:
   1) Erhitzen der Folie; und
   2) Warmformen;
   dadurch gekennzeichnet, daß es ferner die Schritte umfaßt:
   3) Aufsprühen eines Verstärkungsmaterials, bestehend aus einem verschäumbaren ungesättigten Polyester und Glasfaser,auf die Rückseite der warmgeformten Folie;
   4) Härten der Verstärkung; und
   5) Zuschneiden des Endproduktes.